Europäisches Patentamt

European Patent Office

Office européen des brevets

(11) Veröffentlichungsnummer: **0 361 290**
A1

## (12) EUROPÄISCHE PATENTANMELDUNG

(21) Anmeldenummer: **89117341.1**

(51) Int. Cl.⁵: **B28D 7/00**

(22) Anmeldetag: **20.09.89**

(30) Priorität: **29.09.88 DE 3833040**

(43) Veröffentlichungstag der Anmeldung:
**04.04.90 Patentblatt 90/14**

(84) Benannte Vertragsstaaten:
**AT BE CH DE ES FR GB GR IT LI LU NL SE**

(71) Anmelder: **Becher, Reinhard**
**Engelbergstrasse 42**
**D-7000 Stuttgart 31(DE)**

(72) Erfinder: **Becher, Reinhard**
**Engelbergstrasse 42**
**D-7000 Stuttgart 31(DE)**

(74) Vertreter: **Witte, Alexander, Dr.-Ing. et al**
**Witte, Weller & Hilgenfeldt Patent- und**
**Rechtsanwälte Augustenstrasse 7**
**D-7000 Stuttgart 1(DE)**

(54) **Bohrhilfevorrichtung.**

(57) Führung für ein Bohrwerkzeug (42) beim Einbringen einer Bohrung exzentrisch zu einer bereits vorhandenen Fehlbohrung (20), wobei sich die Querschnitte von Fehlbohrung (20) und einzubringender Bohrung überschneiden, mit einem Führungselement (14), in dem eine zylindrische Öffnung (25) zur Führung des Bohrwerkzeuges (42) vorgesehen ist. Vom Führungselement (14) steht ein in die Fehlbohrung (20) einführbares, stabförmiges Teil (16) vor, das zumindest längs einer Außenkante (18) an die Innenwand (21) der Fehlbohrung (20) anlegbar ist.

EP 0 361 290 A1

Fig.7

## Bohrhilfevorrichtung

Die Erfindung betrifft eine Bohrhilfevorrichtung zum Führen eines Bohrwerkzeuges beim Einbringen einer Bohrung in einen Gegenstand, insbesondere in eine Wand, exzentrisch zu einer bereits vorhandenen Fehlbohrung, wobei sich die Querschnitte von Fehlbohrung und Bohrung überschneiden oder unmittelbar benachbart zueinander liegen.

Beim Einbringen von Bohrungen in einen Gegenstand, insbesondere in eine Wand, besteht die Gefahr, daß das Bohrwerkzeug beim Einbringen verläuft, d.h., die Mittellängsachse des entstandenen zylinderförmigen Loches ist gegenüber der gewünschten Lage versetzt. Eine solche Bohrung wird als Fehlbohrung bezeichnet. Eine Fehlbohrung kann auch dadurch entstehen, daß man sich beim Vermessen des Ansatzpunktes für das Bohrwerkzeug geirrt hat und eine an sich exakt zylindrische Bohrung um einen gewissen Betrag versetzt angebracht hat. Der Abstand der Mittellängsachsen zwischen Fehlbohrung und exakter Bohrung, wird als Exzentrizität dieser beiden Bohrungen bezeichnet.

Soll jetzt die exakte Bohrung angebracht werden, wobei sich die Querschnitte der Fehlbohrung und der exakten Bohrung überschneiden oder unmittelbar benachbart nebeneinander liegen, ist es sehr schwierig, das Bohrwerkzeug exakt zu führen, da beim Einbringen der exakten Bohrung das Werkzeug die Tendenz hat, in die Fehlbohrung auszuweichen bzw. in diese hineinzuwandern. Als Resultat erhält man ein unscharf konturiertes Bohrloch, in das beispielsweise ein Dübel nicht mehr festsitzend eingebracht werden kann.

Aus der DE-OS 22 55 598 ist zur Lösung des Problems von Fehlbohrungen bzw. verlaufenen Bohrungen bekannt, mit einem Bohrwerkzeug wesentlich größeren Durchmessers die Fehlbohrung koaxial aufzubohren. Der Umfangkreis des entstandenen Bohrloches muß dabei so groß sein, daß zumindest die Querschnittsfläche der an sich gewünschten exakten Bohrung mit umfaßt wird. In dieses große Loch wird dann ein Dübel eingebracht, der exzentrisch mit einem Sackloch versehen ist, das in Größe und Lage der exakten gewünschten Bohrung entspricht. Dadurch kann dann das Teil, beispielsweise eine Schraube oder ein Stift in die exakte Position eingebracht werden.

Nachteilig an dieser Lösung ist, daß insbesondere bei Bohrungen, die relativ weit verlaufen sind, ein sehr großes Loch in die Wand eingebracht werden muß, da ja sichergestellt sein muß, daß von der nachträglichen großen Bohrung die Querschnittsfläche der exakten gewünschten Bohrung umgrenzt wird. Soll die Bohrung beispielsweise in eine Betonwand eingebracht werden, so ist dies sehr aufwendig, da selbst bei leistungsstarken Bohrwerkzeugen nur sehr mühsam relativ große Bohrungen eingebracht werden können. Ist beispielsweise eine 10 mm-Bohrung um 3 mm verlaufen, muß mit einem 16 mm-Bohrwerkzeug nachgebohrt werden, wodurch gegenüber dem ursprünglich geplanten Loch ein wesentlich größeres entstanden ist. Ein derartig großes Loch bzw. Sackloch kann die Stabilität des Gegenstands beeinträchtigen, in das die Bohrung eingebracht ist. Ferner muß, falls in der exakten Bohrung ein starken Zug- oder Querkräften ausgesetztes Teil gehalten werden soll, der Dübel, der den Restraum ausfüllt, aus hochwertigem Material bestehen, das ja letztendlich die zu viel ausgebohrte Masse ersetzen soll. Ferner ist bei einem solchen Nachbohren auch nicht ausgeschlossen, daß die Bohrung nochmals verläuft.

Aufgabe der vorliegenden Erfindung ist daher, hier Abhilfe zu schaffen und eine Bohrhilfevorrichtung zu schaffen, mit der ohne Notwendigkeit von durchmessergrößerem Bohrwerkzeug relativ zur Fehlbohrung die exakte Bohrung einfach und sicher eingebracht werden kann.

Erfindungsgemäß wird die Aufgabe dadurch gelöst, daß eine Bohrhilfevorrichtung ein Führungselement aufweist, in dem eine, eine zylindrische Wandung aufweisende Öffnung zur Führung des Bohrwerkzeuges vorgesehen ist, wobei vom Führungselement ein in die Fehlbohrung einführbares, stabförmiges Teil vorspringt, das zumindest längs einer Außenkante an die Innenwand der Fehlbohrung anlegbar ist, wobei der Abstand A zwischen der Außenkante des stabförmigen Teils und einer Mittellängsachse des Umfangkreises der zylinderwandigen Öffnung, der dem Umfangskreis des Bohrwerkzeuges entspricht, und zwar über den Mittelpunkt $M_F$ des Fehlbohrungsquerschnitts gesehen, gleich dem Maß der Exzentrizität E zwischen Fehlbohrung und Bohrung plus dem Radius $r_F$ der Fehlbohrung ist.

Das in die Fehlbohrung einbringbare vorspringende Teil des Führungselements, das längs einer Außenkante an die Innenwand der Fehlbohrung anlegbar ist, schafft einen Bezugspunkt zwischen Fehlbohrung und Ansatzpunkt des Werkzeuges für die exakte Bohrung. Die zylinderwandige Öffnung im Führungselement, deren Umfangskreis dem Umfangskreis des Bohrwerkzeuges entspricht, sorgt für eine exakte Führung in axialer bzw. Vorschubrichtung des Bohrwerkzeuges. Das in die Fehlbohrung eingeschobene stabförmige Teil des Führungselements sorgt dafür, daß ein in der Öffnung des Führungselements befindliches Bohrwerkzeug nicht mehr verlaufen kann. Die Verbindung zwischen Führungselement und vorspringendem Teil verhindert somit ein Versetzen quer zur axialen Vorschubrichtung des Bohrwerkzeuges. Die Bohrhilfe kann beispielsweise von Hand ergriffen werden, wobei der Mittelpunkt des Umfangkreises der zylinderwandigen Öffnung des Führungselements exakt auf den Mittelpunkt der gewünschten Bohrung angesetzt wird. Da der Abstand zwischen der Außenkante des in der Fehlbohrung an der Innenseite anliegenden stabförmigen Teiles und dem Mittelpunkt des Umfangkreises der zylinderwandigen Öffnung exakt der Summe von Exzentrizität und Radius der Fehlbohrung entspricht, sitzt die Bohrhilfevorrichtung in Richtung von dem Mittelpunkt der Öffnung im Führungselement auf Richtung anliegende Außenkante aus gesehen unverrückbar fest in bzw. an der Fehlbohrung an, so daß die Bohrung exakt eingebracht werden kann. Wird beispielsweise eine in der Hand gehaltene Bohrhilfevorrichtung noch in der zuvor erwähnten Richtung gedrückt, ist ein besonders fester Sitz gewährleistet. Das Bohrwerkzeug wird beim Einbringen der Bohrung durch die zylinderwandige Öffnung exakt geführt und kann auch während des Eingriffs in das Material nicht mehr verlaufen. Das resultierende Bohrloch, das, je nach Exzentrizität zwischen Bohrung und Fehlbohrung, die Außenkontur einer Acht mit mehr oder weniger ineinandergreifenden Kreisen aufweist, ist sehr scharf konturiert. Der Materialaushub der resultierenden Öffnung ist Wesentlich geringer als bei einer nach der eingangs genannten Art durchgeführten Verfahrensweise, die außerdem dadurch, daß nur ein und dasselbe Werkzeug notwendig ist, wesentlich einfacher durchzuführen ist. Ferner kann es je nach Größe der Bohrung bzw. des Maßes an Exzentrizität und der Belastung des in die Bohrung eingebrachten Gegenstand ausreichend sein, lediglich einen entsprechenden normalen Dübel in die exakte Bohrung einzusetzen, da dieser durch die exakt einbringbare Bohrung über einen großen Umfangsbereich umschlossen bzw. gehalten ist. Ist die Exzentrizität relativ groß, entsteht also eine Öffnung mit einer acht-förmigen Kontur mit relativ geringfügig überschneidenden Kreisen, so kann beispielsweise bei nur einseitiger Belastung es nicht erforderlich sein, die Fehlbohrung aus Stabilitätsgründen auszufüllen. Für den praktischen Einsatz sind Bohrhilfevorrichtungen mit verschiedener Exzentrizität und jeweils für verschiedene Bohrdurchmesser vorgesehen, die als gesamter Satz zur Verfügung gestellt werden können. Ein solcher Satz kann beispielsweise für gängige Bohrlochgrößen, beispielsweise 4, 5, 6, 8 und 10 usw. mm vorgesehen sein, wobei dann für jede Bohrlochgröße Bohrhilfevorrichtungen mit verschiedener Exzentrizität vorhanden sind. Beispielsweise kann für eine 5 mm-Bohrung ein Satz mit Exzentrizität 1, 2, 3, 4, 5, 6, 7 und 8 mm vorgesehen sein. Dabei resultiert bei Exzentrizität bis 5 mm jeweils ein Bohrloch mit sich überschneidenden Querschnitten von Fehlbohrungen exakter Bohrung, wohingegen beispielsweise bei einer Exzentrizität von 7 mm zwei benachbarte Bohrungen entstehen, die lediglich über einen 2 mm breiten Materialsteg getrennt sind.

Die Aufgabe wird somit vollkommen gelöst.

In einer besonders vorteilhaften Ausgestaltung der Erfindung weist das vorspringende, stabförmige Teil einen solchen Querschnitt auf, daß der Raum zwischen eingebrachter Bohrung und verbleibender Fehlbohrung vollständig durch das Teil ausgefüllt wird. Bei sich überschneidenden Querschnittsflächen von Fehlbohrung und exakter Bohrung, weist das Teil einen sichelförmigen Querschnitt auf, der den Raum zwischen Bohrung und Fehlbohrung vollständig ausfüllt. Das vorspringende Teil liegt dann an der Innenwand der Fehlbohrung nicht nur längs einer Außenkante an, sondern über einen umfänglichen Bereich, der exakt dem Umfangbereich entspricht, der nach Einbringen der exakten Bohrung noch von der Fehlbohrung übrig bleibt. Der andere Bogen des sichelförmigen Querschnitts, entspricht dem Umfangsabschnitt der exakten Bohrung, der frei von Material ist, d.h. den Übergang zur Fehlbohrung darstellt. Das bedeutet, dieser innere Sichelbereich des stabförmigen Teils schließt die Lücke des freistehenden Umfangbereichs der exakten Bohrung bzw. dient beim Einbringen der Bohrung als seitliche Führung für das Bohrwerkzeug. Bei dieser Ausgestaltung ist sowohl eine besonders exakte axiale, als auch eine in Querrichtung gesehene Führung des Bohrwerkzeuges erreicht. Ist ist die Exzentrizität zwischen Fehlbohrung und exakter Bohrung so groß, daß die beiden Bohrungsquerschnitte sich nicht berühren, ist der Querschnitt des vorspringenden Teils kreisförmig, wobei dieses dann die Fehlbohrung vollständig ausfüllt. Dadurch ist sichergestellt, daß der Materialsteg zwischen Fehlbohrung und exakter Bohrung nicht bricht und das Bohrwerkzeug schlagartig in die Fehlbohrung läuft.

In einer weiteren Ausgestaltung der Erfindung entspricht die Länge des vorspringenden stabförmigen Teils in etwa der Tiefe der Fehlbohrung.

Diese Maßnahme hat den Vorteil, daß das Bohrwerkzeug während des gesamten Bohrvorganges seitlich vom stabförmigen Teil geführt ist.

In einer weiteren bevorzugten Ausgestaltung der Erfindung ist das stabförmige Teil vom Führungselement abnehmbar und ist als Füllelement für den Raum zwischen Bohrung und Fehlbohrung im Gegenstand verbleibbar.

Diese Maßnahme hat den Vorteil, daß das als Führungselement dienende vorspringende Teil nach Einbringen der exakten Bohrung zusätzlich als Füllelement für den Freiraum zwischen Bohrung und verbleibender Fehlbohrung dient.

In einer weiteren Ausgestaltung der Erfindung ist das stabförmige Teil als Kunststoffteil ausgebildet, das über eine Sollbruchstelle fest, jedoch abbrechbar mit dem Führungselement verbunden ist.

Diese Maßnahme hat den Vorteil, daß eine feste und exakte Führung des Bohrwerkzeuges während des Einbringens der Bohrung vorhanden ist, daß aber das vorspringende Teil nach Fertigstellen der Bohrung beispielsweise durch einfaches Abkippen des Führungselements von diesem abgetrennt werden kann und im Gegenstand verbleiben kann.

In einer weiteren bevorzugten Ausgestaltung der Erfindung ist das Führungselement in einem Halter fest, jedoch lösbar aufgenommen.

Diese Maßnahme hat den Vorteil, daß Führungselemente, die für verschiedene Bohrgrößen bzw. verschiedene Exzentrizitäten vorgesehen sind in ein- und denselben Halter eingeschoben werden können, wodurch durch baulich wenig aufwendige Maßnahme eine vielseitige Einsatzmöglichkeit der erfindungsgemäßen Bohrhilfevorrichtung möglich ist. Der Halter kann entsprechend groß als Handgriff oder ggf. als am Gegenstand ortsfest anbringbar ausgebildet sein, in den je nach auszuführender Bohrung ein Führungselement einsetzbar ist. Nach Durchführung der Bohrung kann das Führungselement wieder aus dem Halter entfernt werden und ein anderes Führungselement eingesetzt werden.

In einer weiteren Ausgestaltung der Erfindung ist das Führungselement als zylindrischer Körper ausgebildet, dessen Zylinderachse parallel zur Achse der Öffnung verläuft, wobei der zylindrische Körper im Paßsitz in eine zylindrische Ausnehmung im Halter einschiebbar ist.

Diese Maßnahme hat den Vorteil, daß ein fertigungstechnisch sehr einfach herstellbares Führungselement geschaffen wird, das beispielsweise als billiges Kunststoffspritzteil hergestellt werden kann. Diese Ausführung eignet sich insbesondere für den Fall, daß das stabförmige Teil vom Führungselement abgebrochen werden soll, um in der Bohrung als Lückenfüller zu dienen. Der zylindrische Körper des Führungselements wird dann nach einem Bearbeitungsvorgang verworfen.

In einer weiteren bevorzugten Ausgestaltung der Erfindung ist der zylindrische Körper an seiner Außenseite mit einer längs verlaufenden Sicke versehen, die in entsprechende, umfänglich um die zylindrische Ausnehmung angeordnete Nuten formschlüssig aufnehmbar ist.

Diese Maßnahme hat den Vorteil, daß das Führungselement verdrehsicher in bestimmte Positionen in die zylindrische Ausnehmung des Halters eingebracht werden kann. Diese Wahlmöglichkeit schafft eine flexible Anpassung an die örtlichen Gegebenheiten am Gegenstand, in den die Bohrung eingebracht werden soll. Liegt beispielsweise die Bohrung in der Nähe einer Ecke, so kann durch geeignetes Einschieben des Führungselements in den Halter bei günstiger Haltemöglichkeit die Bohrhilfevorrichtung an die jeweilige Richtung der Exzentrizität angepaßt werden. Das bedeutet, daß je nachdem, in welcher Richtung die Bohrung verlaufen ist, der Halter sich immer an einer für die Bedienungsperson gleich günstigen Position befinden kann.

In einer weiteren Ausgestaltung der Erfindung ist die Ausnehmung am oberen, der Einführseite für das Führungselement gegenüberliegenden Ende mit einer Ringschulter versehen, die die Einführtiefe des Führungselements bestimmt.

Diese Maßnahme hat den Vorteil, daß ein exaktes Einbringen und Sitzen des Führungselements im Halter gewährleistet ist.

In einer weiteren bevorzugten Ausgestaltung der Erfindung schließt das in die Ausnehmung eingeschobene Führungselement bündig mit einer unteren Anlagekante des Halters ab.

Diese Maßnahme hat den Vorteil, daß, falls beispielsweise eine Bohrung in eine Wand eingebracht werden kann, der Halter über die untere Anlagekante bündig an der Wand anliegend am Bohrloch angesetzt werden kann.

In einer weiteren Ausgestaltung der Erfindung ist der Halter mit einer Grifflasche versehen, über die er von Hand haltbar ist.

Diese Maßnahme hat den Vorteil, daß beim praktischen Einsatz die gesamte Bohrhilfevorrichtung in einer Hand gehalten werden kann, wobei das stabförmige Teil in die Fehlbohrung eingeschoben ist, und daß mit der anderen Hand eine Bohrmaschine mit dem Bohrwerkzeug an der Bohrhilfevorrichtung angesetzt werden kann, indem das Bohrwerkzeug in die Öffnung im Führungselement eingeschoben wird. Dadurch können einfach und rasch, ggf. mehrere Fehlbohrungen nachträglich korrigiert werden.

In einer weiteren vorteilhaften Ausgestaltung der Erfindung steht die Grifflasche senkrecht zur Gegenstandsebene und ist im Abstand zur die Ausnehmung aufweisenden Bereich des Halters vorgesehen.

Diese Maßnahme hat den Vorteil, daß zum einen der Halter an einer Wand anliegend gut und fest ergriffen werden kann, und daß ferner durch den Abstand zwischen Grifflasche und dem das Führungselement tragenden Bereich sichergestellt ist, daß beispielsweise eine Bohrmaschine bis nahe an die Öffnung herangeführt werden kann, ohne daß es mit der Grifflasche in Berührung tritt.

In einer weiteren Ausgestaltung der Erfindung ist die zylinderwandige Öffnung im Führungselement als zylindrisches Loch ausgebildet.

Diese Maßnahme hat den Vorteil, daß das Bohrwerkzeug im Führungselement etwa formschlüssig um seinen ganzen Umfang herum geführt ist. Dadurch ist jegliches Auswandern oder Verkanten des Bohrwerkzeuges ausgeschlossen.

In einer weiteren Ausgestaltung der Erfindung ist die zylinderwandige Öffnung als nutenförmige Ausnehmung mit halbkreisförmigem Querschnitt ausgebildet.

Diese Maßnahme hat den Vorteil, daß insbesondere in Verbindung mit der Ausbildung des Führungselements als Kunststoffspritzgußteil ein besonders einfach herstellbares, somit kostengünstiges Führungselement hergestellt werden kann. Das Führungselement bzw. der Körper, von dem das vorspringende, stabförmige Teil absteht, kann dann die Form einer längs geteilten Ringscheibe aufweisen, so daß das Bohrwerkzeug seitlich an die zylinderwandige Öffnung bzw. nutenförmige Ausnehmung herangelegt werden kann. Die zumindest im Querschnitt halbkreisförmige Nut stellt sicher, daß das Bohrwerkzeug auch sicher geführt wird, wobei selbstverständlich dann das stabförmige vorspringende Teil etwa im Scheitelpunkt des grob hufeisenförmigen Führungselementes bzw. dem Scheitelpunkt der halbkreisförmigen Nut angeordnet ist.

In einer weiteren Ausgestaltung der Erfindung ist das stabförmige, vom Führungselement vorspringende Teil, an der dem Bohrwerkzeug zugewandten Seite mit Aussparungen bzw. Einschnitten versehen.

Diese Maßnahme hat den Vorteil, daß ein in die exakte Bohrung eingebrachter Dübel mit seiner Außenseite, von der sich Teile weg erstrecken, mit den Aussparungen bzw. Rillen in Eingriff treten kann. Dadurch wird eine besonders innige und intensive Verbindung zwischen Dübel und in der Fehlbohrung verbleibendem Teil hergestellt.

In einer weiteren Ausgestaltung der Erfindung ist das stabförmige Teil an der, an der Innenwand der Fehlbohrung anliegenden Seite bzw. Außenkante, mit einer widerhakenartigen Kontur versehen.

Diese Maßnahme hat den Vorteil, daß das stabförmige Teil, das nach Ablösen vom Führungselement in der Fehlbohrung verbleiben soll, nicht aus dieser herausgezogen werden kann bzw. durch die widerhakige Kontur einem solchen Herausziehen widersteht.

Diese Maßnahme ist insbesondere in Zusammenhang mit der Ausbildung der dem Bohrwerkzeug zugewandten Seite mit Aussparungen oder Einschnitten besonders vorteilhaft, da dann einerseits eine feste Verbindung mit einem Dübel und andererseits ein fester Sitz des Zusammenbaus aus Dübel und stabförmigem Teil im Mauerwerk gewährleistet ist.

In einer weiteren Ausgestaltung der Erfindung ist ein separates Teil vorgesehen, das dem vorspringenden stabförmigen Teil entspricht, und das separate Teil ist dazu vorgesehen, den Raum der Fehlbohrung abzüglich des durch die einzubringende Bohrung benötigten Überschneidungsraumes auszufüllen.

Diese Maßnahme hat den Vorteil, daß ein separates Füllelement vorgesehen ist, um den Freiraum zwischen Bohrung und verbleibender Fehlbohrung auszufüllen. Diese Ausführung ist insbesondere dann vorgesehen, falls die Bohrhilfevorrichtung aus einem teuren Material, beispielsweise einem teuren Metall oder einer teuren Metallegierung hergestellt ist. In diesem Fall wäre es dann unwirtschaftlich, von der Bohrhilfevorrichtung das vorspringende stabförmige Teil abzutrennen und als Füllelement zu verwenden. In diesem Fall wird dann das separate Teil, das beispielsweise aus Kunststoffmaterial hergestellt sein kann, als Füllelement verwendet. Muß eine ganze Reihe von Fehlbohrungen korrigiert werden, so kann mit ein- und derselben Bohrhilfevorrichtung die entsprechende Reihe an korrekten Bohrungen eingebracht werden und anschließend wird jeweils ein separates Teil in den Differenzraum zwischen Fehlbohrung und korrekter Bohrung als Füllelement eingeschoben. Dabei ist es unerheblich, ob die Bohrhilfevorrichtung aus Metall oder einem kostengünstigen Kunststoff hergestellt ist, da ja durch Abbrechen des vorspringenden stabförmigen Teils ja lediglich ein Differenzraum ausgefüllt werden kann. Es ist ein Set an zusätzlichen separaten Teilen vorgesehen, deren Ausgestaltung, d.h., Querschnittsform und Länge dem vorspringenden stabförmigen Teil der Bohrhilfevorrichtung entspricht, so daß nach Wahl des Benutzers entweder das vorspringende stabförmige Teil von der Bohrhilfe abgelöst werden kann und als Füllelement verwendet wird, oder ein entsprechendes separates Teil als Füllelement verwendet wird.

In einer weiteren vorteilhaften Ausgestaltung der Erfindung weist das separate Teil mehrere Sollbruchstellen auf, so daß es durch Abbrechen von Teilstücken gekürzt werden kann.

Diese Maßnahme hat den Vorteil, daß ein separates Teil einer bestimmten Querschnittsform für verschiedene Bohrungstiefen verwendet werden kann. Durch Abbrechen von Teilstücken kann das separate Teil jeweils vor Ort an die Tiefe der Bohrung angepaßt werden.

In einer weiteren vorteilhaften Ausgestaltung der Erfindung ist an einem Ende des separaten Teils ein seitlich vorspringendes Element vorgesehen, das die Einschiebtiefe des separaten Teils in den auszufüllenden Raum begrenzt.

Diese Maßnahme hat den Vorteil, daß das separate Teil nicht zu tief in die Bohrung hineingeschoben werden kann, so daß der Bereich der Bohrung, der sich zur Außenseite hin öffnet, auf jeden Fall ausgefüllt ist. Dadurch ist dann ein besonders sicherer Sitz eines in die exakte Bohrung eingebrachten Dübels gewährleistet.

Es versteht sich, daß die vorstehend genannten und die nachstehend noch zu erläuternden Merkmale nicht nur in der jeweils angegebenen Kombination, sondern auch in anderen Kombinationen und in Alleinstellung einsetzbar sind, ohne den Rahmen der vorliegenden Erfindung zu verlassen.

Die Erfindung wird nachfolgend anhand einiger ausgewählter Ausführungsbeispiele in Zusammenhang mit den beiliegenden Zeichnungen näher beschrieben und erläutert. Es zeigen:

Fig. 1 eine seitliche Explosionsansicht einer erfindungsgemäßen Bohrhilfevorrichtung;

Fig. 2 eine Vorderansicht der Bohrhilfevorrichtung von Fig. 1;

Fig. 3 eine Draufsicht auf ein Führungselement der erfindungsgemäßen Bohrhilfevorrichtung von Fig. 1 und 2;

Fig. 4 eine Unteransicht des Führungselements von Fig. 3;

Fig. 4a eine der Fig. 4 entsprechende Unteransicht eines weiteren Ausführungsbeispiels eines Führungselements;

Fig. 5 eine Draufsicht auf die Bohrhilfevorrichtung von Fig. 1 in zusammengesetzten Zustand;

Fig. 6 eine Unteransicht eines Halters der Bohrhilfevorrichtung von Fig. 1;

Fig. 7 schematisch die Anwendung der Bohrhilfevorrichtung Von Fig. 1;

Fig. 8 einen teilweisen Längsschnitt der Darstellung von Fig. 7 zu einem späteren Arbeitszeitpunkt;

Fig. 9 einen Schnitt, längs der Linie IX-IX in Fig. 8;

Fig. 10 einen Schnitt längs der Linie X-X in Fig. 8;

Fig. 11 eine Seitenansicht eines weiteren Ausführungsbeispiels eines Führungselements;

Fig. 12 eine weitere Seitenansicht des Führungselements von Fig. 11;

Fig. 13 einen Schnitt längs der Linie XIII-XIII in Fig. 12;

Fig. 14 einen Längsschnitt eines separaten Füllelements eines weiteren Ausführungsbeispiels einer erfindungsgemäßen Bohrhilfevorrichtung;

Fig. 15 eine der Darstellung von Fig. 14 entsprechende Darstellung, nachdem ein Teilstück des Füllelements abgebrochen wurde;

Fig. 16 einen Schnitt längs der Linie XVI-XVI in Fig. 14;

Fig. 17 einen Schnitt längs der Linie XVII-XVII in Fig. 14, und

Fig. 18 einen Schnitt durch eine Wand mit einer Fehlbohrung sowie einer exakten Bohrung, wobei das Füllelement von Fig. 14 eingeführt ist.

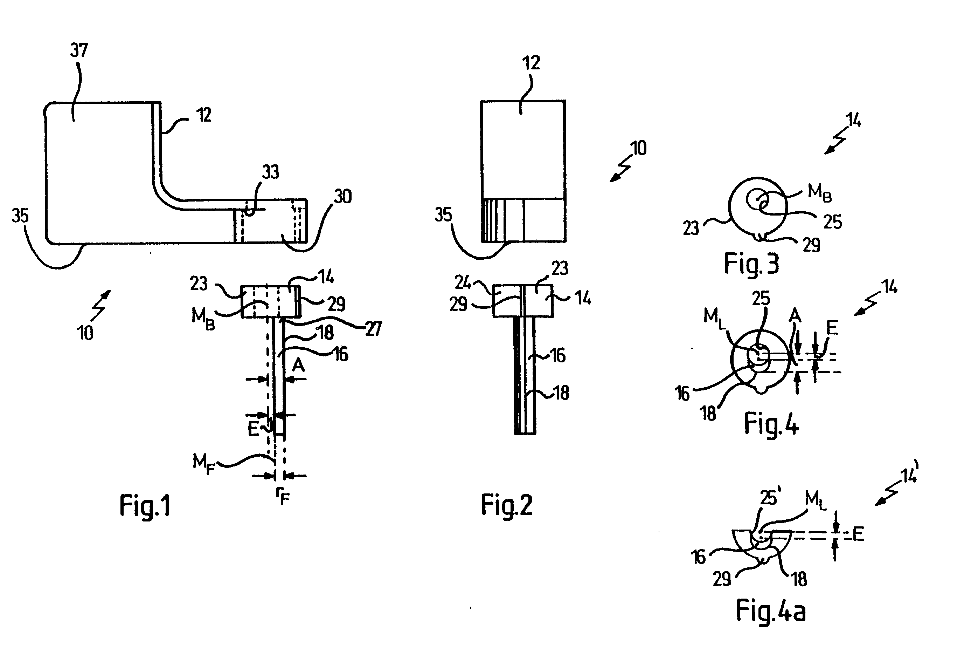

Eine in Fig. 1 bis 6 dargestellte Bohrhilfevorrichtung 10 weist einen Halter 12 und ein Führungselement 14 auf.

Das Führungselement 14 weist einen zylindrischen Körper 23 auf, der mit einer zylindrischen Öffnung 25 versehen ist. Die Zylinderachse der zylindrischen Öffnung 25 und die Zylinderachse des zylindrischen Körpers 23 verlaufen parallel.

Der zylindrische Körper 23 ist an seiner Außenseite 24 mit einer über seine gesamte Höhe verlaufende Sicke 29 versehen, die ein etwa halbkreisförmiges Querschnittsprofil aufweist (siehe Fig. 3 und 4). Von einer unteren Kreisfläche des zylindrischen Körpers 23 erstreckt sich ein stabförmiges Teil 16 weg.

Das stabförmige Teil 16 weist ein im Querschnitt sichelförmiges Profil auf (siehe Fig. 4), wobei die Rundungen des Sichelabschnittes jeweils der Rundung der zylindrischen Öffnung 25 im Führungselement 14 entsprechen. Das stabförmige Teil 16 ist dabei derart am Rand der zylindrischen Öffnung 25 angeordnet (siehe Fig. 4), daß die innere kürzere Rundung des sichelförmigen Querschnitts deckungsgleich mit einem Bereich der Umfangslinie der zylindrischen Öffnung 25 verläuft. Eine äußere Längskante bzw. Außenkante 18 des stabförmigen Teils weist vom Mittelpunkt $M_B$ der zylindrischen Öffnung 25 bzw. der durch diese reichenden Zylinderachse einen Abstand A auf.

Das Führungselement 14 ist als Kunststoffspritzteil ausgebildet.

Der sich lotrecht von der unteren Zylinderfläche des Führungselements 14 weg erstreckende stabförmige Teil 16, ist über eine Sollbruchstelle 27 mit dieser Zylinderfläche verbunden.

Das stabförmige Teil 16 kann somit durch seitliches Abbiegen vom zylindrischen Körper 23 abgetrennt werden.

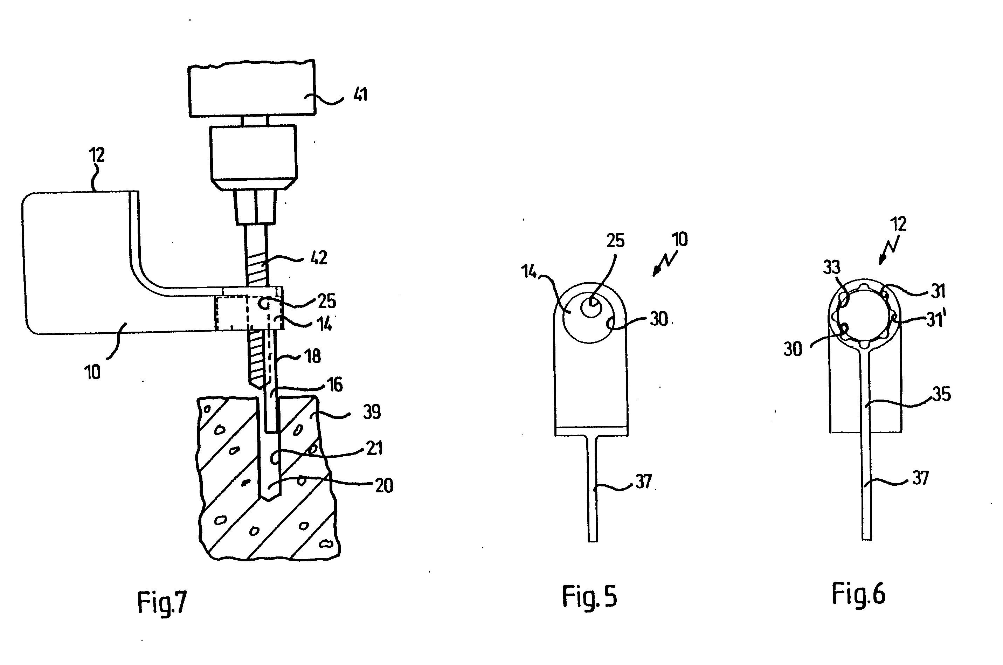

Der Halter 12 weist eine plattenförmige Grifflasche 37 auf (siehe auch Fig. 5 und 6), die in ein vorderes Nasenteil übergeht, das mit einer zylindrischen Ausnehmung 30 versehen ist.

Die zylindrische Ausnehmung ist dabei derart, daß das Führungselement 14 von unten in die zylindrische Ausnehmung 30 eingeschoben werden kann. Die zylindrische Ausnehmung 30 ist (siehe Fig. 6) umfänglich mit, in Einschubrichtung des Führungselements 18 gesehen, längs verlaufenden Nuten 31, 31'.... versehen, die der Kontur der Sicke 29 am zylindrischen Körper 23 des Führungselements 14 entsprechen. Die Tiefe der Ausnehmung 30 ist derart, daß der zylindrische Körper 23 des Führungselements 14 vollkommen in die Ausnehmung 30 eingeschoben Werden kann. Die maximale Einschubtiefe ist durch eine obere, innere Ringschulter 33 in der Ausnehmung 30 begrenzt. Bei vollkommen eingeschobenem zylindrischen Körper 23 des Führungselements 14 schließt dessen untere Zylinderfläche bündig mit einer Anlagekante 35 des Halters 12 ab. Durch die formschlüssige Aufnahme von Sicke 29 und einer Nut 31 ist das Führungselement 14 drehfest im Halter 12 aufgenommen.

Die zylindrische Öffnung 25 ist, in Draufsicht auf die aus Halter 12 und Führungselement 14 zusammengesetzte Bohrhilfevorrichtung 10 gesehen (Fig. 5), von oben zugänglich.

Der Durchmesser der zylindrischen Öffnung 25 entspricht dem Durchmesser eines Bohrwerkzeuges bzw. Bohrers 42 einer Bohrmaschine 41, so daß der Bohrer 42 von oben durch die Bohrhilfevorrichtung, wie in Fig. 7 dargestellt ist, durchgeschoben werden kann.

Ein in Fig. 4a dargestelltes weiteres Ausführungsbeispiel eines Führungselements $14'$ ist im wesentlichen gleich aufgebaut wie das in Zusammenhang mit Fig. 4 beschriebene Führungselement 14, es ist in Abweichung dazu jedoch nicht als zylindrischer Körper mit einer Bohrung ausgebildet, sondern als in Draufsicht, wie in Fig. 4a dargestellt, etwa hufeisenförmiger oder U-förmiger Körper, mit jeweils kreisförmigen Rundungen ausgebildet. Das Führungselement $14'$ kann man sich so vorstellen, daß man das in Fig. 4 dargestellte Führungselement 14 durch einen quer verlaufenden Schnitt, der durch den Mittelpunkt $M_L$ der Öffnung 25 verläuft, aufgetrennt ist. Demzufolge weist das Führungselement $14'$ eine im Querschnitt halbkreisförmige nutenartige Ausnehmung $25'$ auf. Das stabförmige Teil 16 ist dabei jeweils so angeordnet, daß es sich um den Zenit der Halbkreiskontur der Ausnehmung $25'$ herum legt. Das Führungselement $14'$ ist fertigungstechnisch als Kunststoffspritzgußteil einfacher herzustellen, als das Führungselement 14, da in der Spritzgußform zur Herstellung des Führungselements $14'$ lediglich seitlich vorragende Bauteile vorhanden sein müssen, um in einem kontinuierlichen Verfahren die Kontur des Führungselements $14'$ von Fig. 4a herzustellen. Das Führungselement $14'$ kann selbstverständlich auch in den Halter 12 eingeschoben Werden.

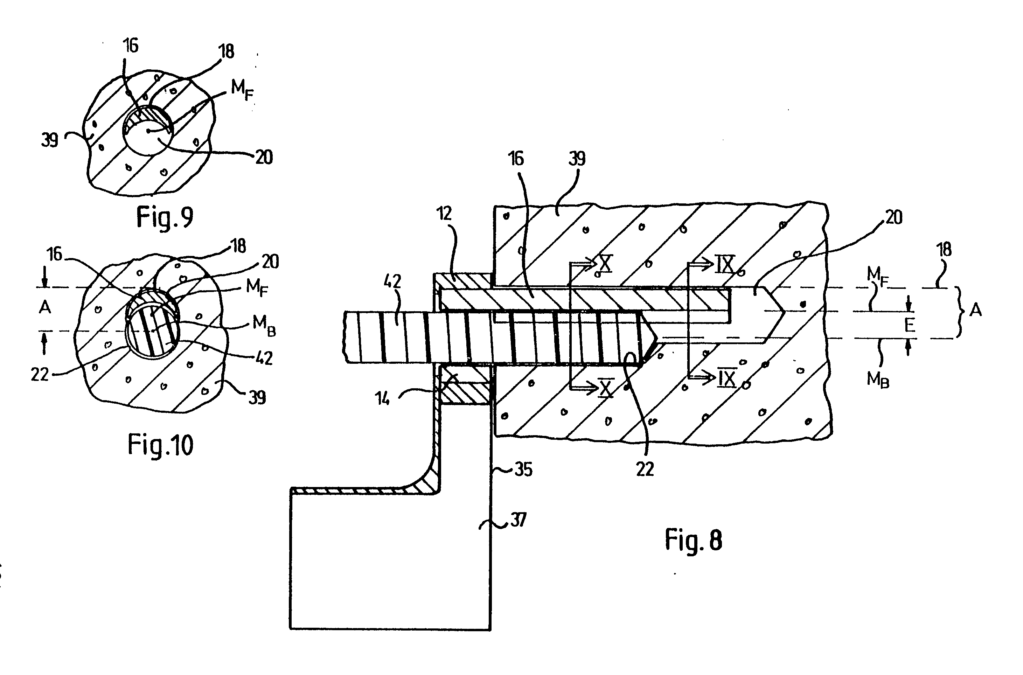

Die erfindungsgemäße Bohrhilfevorrichtung 10 dient dazu, um mit der Bohrmaschine 41 unmittelbar neben einer Fehlbohrung 20 in einer Wand 39 eine richtig sitzende, exakte Bohrung 22 (siehe Fig. 8) einzubringen. Der Innendurchmesser der Fehlbohrung 20 entspricht dabei dem Außendurchmesser des Bohrers 42, mit dessen Hilfe die Fehlbohrung zuvor angefertigt wurde.

Der Abstand zwischen der Mittellängsachse $M_F$ der Fehlbohrung 20 (siehe Fig. 8) und der Mittellängsachse $M_B$ der exakten Bohrung, entspricht der Exzentrizität E zwischen Bohrung 22 und Fehlbohrun 20. Das heißt, die Exzentrizität gibt das Maß an, um wieviel die Fehlbohrung 22 gegenüber der eigentlich gewünschten Bohrung 22 versetzt bzw. verlaufen ist.

In Kenntnis dieser Exzentrizität E und in Kenntnis des Radius $r_F$ der Fehlbohrung 20 bzw. der Bohrung 22, wird ein Führungselement 14 verwendet, bei dem der Abstand A zwischen der Außenkante 18 des stabförmigen Teils 16, über den Mittelpunkt bzw. der Mittellängsachse $M_F$ der Fehlbohrung gesehen, und der Mittellängsachse $M_B$ der zylindrischen Öffnung 25 im zylindrischen Körper 23 des Führungselements 14 gleich der Summe aus Exzentrizität E und Radius $r_F$ der Fehlbohrung 20 ist (A = E + $r_F$). Bei anderen Exzentritäten bzw. anderen Maßen an Fehlbohrungen, werden entsprechend andere Führungselemente 14 verwendet, die jedoch allesamt einen durchmessergleichen zylindrischen Körper 23 aufweisen, so daß verschieden ausgestaltete Führungselemente 14 in den gleichen Halter 12 eingeschoben können nen.

Wie aus Fig. 7 zu entnehmen, wird die erfindungsgemäße Bohrhilfevorrichtung 10 derart in die Fehlbohrung 20 eingeschoben, daß das stabförmige Teil 16 mit seiner Außenkante 18 bzw. der gesamten Außenwand an der Innenwand 21 der Fehlbohrung 20 anliegt. Die Bohrhilfevorrichtung 10 wird dann derart durch Verschwenken ausgerichtet, daß der Kreismittelpunkt $M_B$ der zylindrischen Öffnung 25 im zylindrischen Körper 23 des Führungselements 14 exakt über dem Kreismittelpunkt des Querschnittes der exakten Bohrung 22 zum Liegen kommt.

Dabei kann, wie in Fig. 7 angedeutet, die Bohrmaschine 41 bereits mit ihrem Bohrer 42 durch die zylindrische Öffnung 25 durchgeschoben sein, um durch gleichzeitiges Verschwenken und Halten von Bohrmaschine 41 und Bohrhilfevorrichtung exakt den gewünschten Mittelpunkt der exakten Bohrung 22 anpeilen zu können.

Die Bohrhilfevorrichtung 10 wird zum eigentlichen Bohrvorgang an die Wand 39 angelegt, so daß, wie aus Fig. 8 zu entnehmen, die Anlagekante 35 der Bohrhilfevorrichtung 10 längs der Außenseite der Wand liegt. Dabei liegt das rechtwinklig abstehende stabförmige Teil 16 bündig an der Innenwand 21 der Fehlbohrung 20 an. Der Bohrer 42 der Bohrmaschine 41 ist zum einen durch die formschlüssige Aufnahme in der zylindrischen Öffnung 25 und durch bündige Anlage des stabförmigen Teiles 16 in der Fehlbohrung 20 sowohl in axialer als auch in Querrichtung exakt positioniert.

Beim Eindringen des Bohrers 42 in die Wand 39 zum Einbringen der exakten Bohrung 22 (siehe Fig. 8 und 10) wird der Bohrer 42 in Längsrichtung seitlich vom innenliegenden sichelförmigen Abschnitt des stabförmigen Teiles 16 exakt geführt. Durch festes Halten des Halters 12 an der Grifflasche 37 ist ein Abdriften oder Verlaufen des Bohrers nicht mehr möglich. Es ist daher mit Hilfe der erfindungsgemäßen Bohrhilfevorrichtung 10 möglich, die Bohrung 22 exakt in die Wand 39 einzubringen, ohne daß Material im Übergangsbereich zu der Fehlbohrung 20 ausgerissen wird.

Nach Einbringen der Bohrung 22 können die Bohrmaschine 41 und die Bohrhilfevorrichtung 10 von der Wand abgezogen werden und beispielsweise ein Dübel oder ein Stift in die Bohrung 22 eingetrieben werden.

Sollte der Stift extremen, nach oben bzw. unten gerichtete Belastungen ausgesetzt sein, so könnte es möglich sein, daß der Stift bzw. der Dübel sich in den höhergelegenen verbleibenden Freiraum der Fehlbohrung 20 hineinbewegen bzw. hineinkippen.

Sollte dies zu befürchten sein, so kann das stabförmige Teil 16 durch Abbrechen, wobei dies durch Vorsehen der Sollbruchstelle 27 exakt an dem Übergang zwischen stabförmigen Teil 16 zum zylindrischen Körper 23 stattfindet, vom Führungselement 14 abgenommen werden und in diesen Freiraum eingeschoben werden.

Die gesamte Öffnung in der Wand 39 wäre dann entsprechend der Darstellung von Fig. 10 ausgefüllt.

Die in Fig. 1 bis 10 dargestellte Bohrhilfevorrichtung 10 besteht vollständig aus Kunststoffmaterial, und kann somit aus kostengünstigen Spritzgußteilen hergestellt werden.

In anderen Ausführungen kann auch der Halter 12 aus Metall ausgebildet sein. Dies wird insbesondere dann der Fall sein, falls ein ganzer Satz an Führungselementen 14 vorgesehen ist, die allerdings als Kunststoffeinwegteile oder Einmalgebrauchteile ausgebildet sein können. In einem solchen Satz können je nach Verwendungsweise von einer Ausbildung eines Führungselements nur ein oder mehrere Exemplare vorhanden sein. Wird mit der Arbeitsweise des Abbrechens des stabförmigen Teiles 16 gearbeitet, sind in einem solchen Satz mehrere gleiche Ausführungen an Führungselementen 14 vorhanden.

Es ist auch möglich, sowohl den Halter 12 als auch den Satz an Führungselementen 14 aus Metall auszubilden, wodurch dann eine besonders dauerhafte und für mehrfachen Einsatz geeignete Bohrhilfe geschaffen ist. Diese auf hohe Lebensdauer ausgerichtete Bohrhilfevorrichtung ist insbesondere für Handwerksbetriebe geeignet.

In einem solchen Satz sind dann Führungselemente mit zylindrischen Öffnungen 25 der gängigen Bohrergrößen vorhanden.

Für jede Bohrergröße ist dann ein Untersatz an Führungselementen 14 enthalten, die verschiedene Maße an Exzentrizitäten E aufweisen.

Das Maß der Exzentrizität kann auch so groß sein, daß sich Bohrung 22 und Fehlbohrung 20 bzw. deren Querschnitte nicht mehr berühren.

In diesem Fall ist dann das stabförmige Teil 16 als zylindrischer Stab mit dem Durchmesser der Fehlbohrung ausgebildet. Es kann dann exakt neben der Fehlbohrung 20 eine weitere Bohrung 22 eingebracht werden, wobei die Bohrungen nur durch einen äußerst dünnen Materialsteg verbunden sind. In diesem Fall ist es dann aus Stabilitätsgrunden auch oftmals wünschenswert, daß das stabförmige Teil 16 in der Fehlbohrung 20 verbleibt.

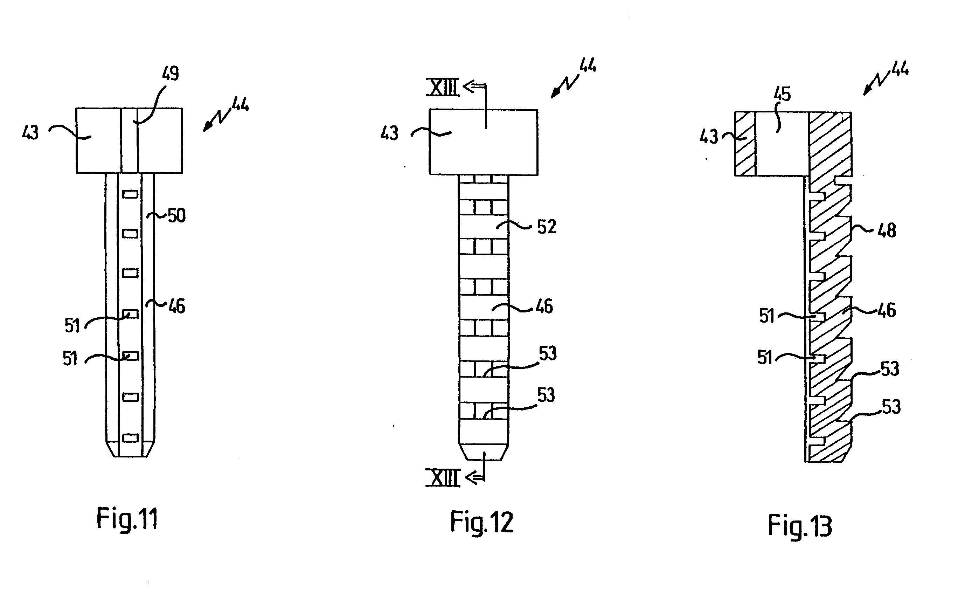

Ein in Fig. 11 bis 13 dargestelltes weiteres Ausführungsbeispiel eines Führungselements 44 weist wie zuvor in Zusammenhang mit Fig. 1 bis 10 beschrieben, einen zylindrischen Körper 43 und einen sich davon weg erstreckenden stabförmigen Teil 46 auf. Im zylindrischen Körper 43 ist eine durchgehende Öffnung 45 vorgesehen, die, wie zuvor beschrieben, zur Führung eines Bohrwerkzeuges dient.

Das stabförmige Teil 46 ist, wie zuvor beschrieben, im Querschnitt sichelförmig und ist an seiner Seite 50, die dem Bohrwerkzeug zugewandt ist, mit Aussparungen bzw. Einschnitten 51 versehen. Die Aussparungen/Einschnitte 51 dienen dazu, daß, falls das stabförmige Teil 46 vom zylindrischen Körper 43 getrennt wird und in dem Zwischenraum zwischen exakter und Fehlbohrung verbleibt, ein in die exakte Bohrung eingeführter Dübel mit seinen an seiner Außenseite vorstehenden Teile in diese Aussparungen oder Einschnitte des stabförmigen Teils 46 eingreifen kann, so daß ein in Langsrichtung fester Sitz zwischen Dübel und stabförmigem Teil 46 möglich ist, d.h., daß diese in Längsrichtung relativ zueinander nicht mehr verschiebbar sind.

An seiner der Seite 50 gegenüberliegenden Seite 52 ist das stabförmige Teil 46 mit Widerhaken 53 versehen. Die Widerhaken 53 an der Seite 52 des stabförmigen Teils 46 können dabei auch wieder durch Materialaussparungen gebildet werden. Über die Seite 52 bzw. längs der Außenseite 48 liegt das stabförmige Teil 46 an der Innenwand der Fehlbohrung an. Soll das stabförmige Teil 46, wie zuvor beschrieben, in der Fehlbohrung nach Einbringen der exakten Bohrung verbleiben, und ist in die exakte Bohrung ein Dübel eingebracht und durch Eindrehen beispielsweise einer Schraube in den Dübel dieser aufgespreizt, so drücken die Widerhaken 53 derart gegen die Innenwand der Fehlbohrung, daß das stabförmige Teil 46 nicht mehr aus der Bohrungsöffnung herausgezogen werden kann. Dadurch wird quasi die verhakende Wirkung des Dübels über die Widerhaken 53 fortgesetzt, so daß der Zusammenbau aus Dübel und stabförmigen Teil 46 axial unverrückbar in einer Wand sitzt.

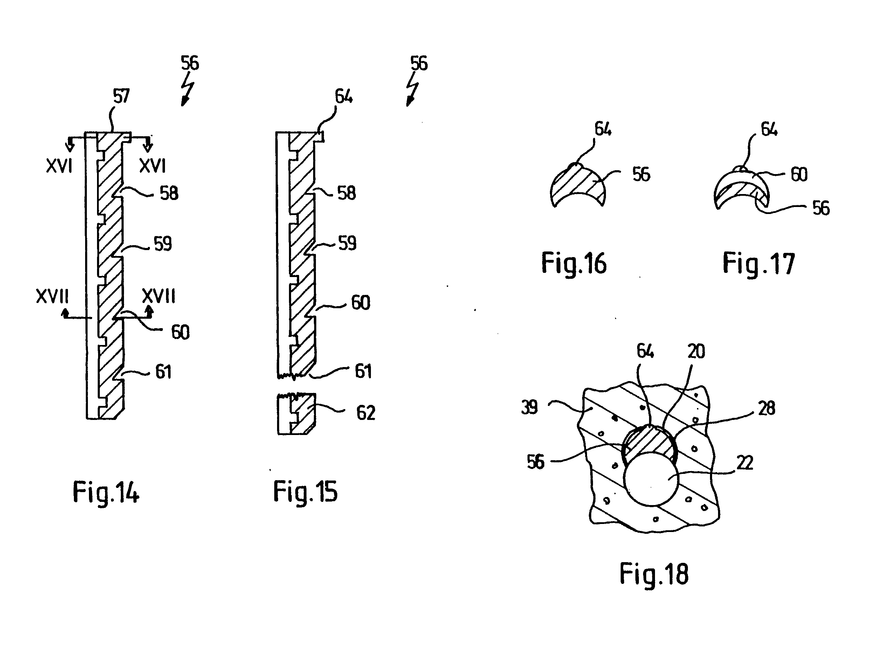

Ein in Fig. 14 bis 18 dargestelltes separates Teil 56 entspricht in Form und Ausgestaltung einem stabförmigen Teil einer Bohrhilfevorrichtung, wie sie in Zusammenhang mit Fig. 1 bis 13 beschrieben wurde.

Das in Fig. 14 dargestellte separate Teil 56 weist im Querschnitt dieselbe Kontur wie das in Fig. 13 dargestellte stabförmige Teil 46 auf.

Wurde somit, wie zuvor in Zusammenhang mit Fig. 1 bis 13 beschrieben, eine exakte Bohrung 22 (siehe Fig. 18) neben einer Fehlbohrung 20 in eine Wand 39 eingebracht, so ist es nicht notwendig, aus dem in Fig. 13 dargestellten Führungselement 44 das stabförmige Teil 46 abzubrechen, sondern stattdessen kann das separate Teil 56 eingeschoben werden.

Das separate Teil 56 ist an seiner Außenseite mit verschiedenen Einkerbungen versehen, die, wie zuvor in Zusammenhang mit Fig. 13 beschrieben, als Widerhaken dienen können. Diese Einkerbungen bilden außerdem auch Sollbruchstellen 58, 59, 60 und 61. Durch Abbrechen eines Teilstückes 62 (siehe Fig. 15) kann das in Fig. 14 dargestellte separate Teil 56 um ein entsprechendes Maß gekürzt werden. Es ist somit möglich, das in Fig. 14 dargestellte separate Teil 56 für verschiedene Bohrungstiefen zu verwenden.

An einem Ende 57 ist das separate Teil 56 mit einem halbmondartig seitlich vorspringenden Element 64 versehen, das dazu dient, die Einschiebtiefe des separaten Teiles 57 in den Raum 28 (siehe Fig. 18) zu begrenzen. Dadurch ist sichergestellt, daß das separate Teil 56 den nach Einbringen der exakten Bohrung 22 verbleibenden Raum 28 in dem Bereich exakt ausfüllt, in dem sich die Bohrung 22 auf den Betrachter zu öffnet.

**Ansprüche**

1. Bohrhilfevorrichtung zum Führen eines Bohrwerkzeugs (41, 42) beim Einbringen einer Bohrung (22) in einen Gegenstand, insbesondere in eine Wand (39), exzentrisch zu einer bereits vorhandenen Fehlbohrung (20), wobei sich die Querschnitte von Fehlbohrung (20) und Bohrung (22) überschneiden oder unmittelbar benachbart zueinander liegen, mit einem Führungselement (14, 14', 44), in dem eine, eine zylindrische Wandung aufweisende Öffnung (25, 45) zur Führung des Bohrwerkzeuges (42) vorgesehen ist, wobei vom Führungselement (14, 14', 44) ein in die Fehlbohrung (20) einführbares stabförmiges Teil (16, 46) vorspringt, das zumindest längs einer Außenkante (18, 48) an die Innenwand (21) der Fehlbohrung (20) anlegbar ist, wobei der Abstand (A) zwischen Außenkante (18, 48) des stabförmigen Teils (16, 46) und einer Mittellängsachse ($M_B$) des Umfangskreises der zylinderwandigen Öffnung (25), der dem Umfangskreis des Bohrwerkzeuges entspricht, und zwar über den Mittelpunkt ($M_F$) des Fehlbohrungsquerschnitts gesehen, gleich dem Maß der Exzentrizität (E) zwischen Fehlbohrung (20) und Bohrung (22) plus dem Radius ($r_F$) der Fehlbohrung ist ($A = E + r_F$).

2. Bohrhilfevorrichtung nach Anspruch 1, dadurch gekennzeichnet, daß das vorspringende, stabförmige Teil (16, 46) einen solchen Querschnitt aufweist, daß der Raum zwischen eingebrachter Bohrung (22) und verbleibender Fehlbohrung vollständig durch das Teil (16, 46) ausgefüllt wird.

3. Bohrhilfevorrichtung nach Anspruch 1 oder 2, dadurch gekennzeichnet, daß die Länge des vorspringenden, stabförmigen Teils (16, 46) in etwa gleich der Tiefe der Fehlbohrung (20) ist.

4. Bohrhilfevorrichtung nach Anspruch 1, 2 oder 3, dadurch gekennzeichnet, daß das stabförmige Teil (16, 46) vom Führungselement (14, 14', 44) abnehmbar ist und als Füllelement für den Raum zwischen Bohrung (22) und Fehlbohrung (20) im Gegenstand verbleibbar ist.

5. Bohrhilfevorrichtung nach Anspruch 4, dadurch gekennzeichnet, daß das stabförmige Teil (16, 46) als Kunststoffteil ausgebildet ist, das über eine Sollbruchstelle (27) fest, jedoch abbrechbar mit dem Führungselement (14, 14', 44) verbunden ist.

6. Bohrhilfevorrichtung nach Anspruch 1 oder einem oder mehreren der folgenden, dadurch gekennzeichnet, daß das Führungselement (14, 14', 44) in einem Halter (12) fest, jedoch lösbar aufgenommen ist.

7. Bohrhilfevorrichtung nach Anspruch 6, dadurch gekennzeichnet, daß das Führungselement (14, 44) als etwa zylindrischer Körper (23, 43) ausgebildet ist, dessen Zylinderachse parallel zur Achse der Öffnung (25, 45) verläuft, wobei der zylindrische Körper (23, 43) im Paßsitz in eine zylindrische Ausnehmung (30) im Halter (12) einschiebbar ist.

8. Bohrhilfevorrichtung nach Anspruch 7, dadurch gekennzeichnet, daß das Führungselement (14, 44) an seiner Außenseite mit zumindest einer längsverlaufenden Sicke (29) versehen ist, die in entsprechende, umfänglich um die zylindrische Ausnehmung (30) angeordnete Nuten (31, 31' ...) formschlüssig aufnehmbar ist.

9. Bohrhilfevorrichtung nach Anspruch 7 oder 8, dadurch gekennzeichnet, daß die Ausnehmung (30) am oberen, der Einführseite für das Führungselement (14, 44) gegenüberliegenden Ende mit einer Ringschulter (33) versehen ist, die die maximale Einführtiefe des Führungselements (14, 44) bestimmt.

10. Bohrhilfevorrichtung nach Anspruch 9, dadurch gekennzeichnet, daß ein in die Ausnehmung (30) eingeschobenes Führungselement (14, 44) bündig mit einer unteren Anlegekante (35) des Halters (12) abschließt.

11. Bohrhilfevorrichtung nach Anspruch 6 oder einem oder mehreren der folgenden, dadurch gekennzeichnet, daß der Halter (12) mit einer Grifflasche (37) versehen ist, über die er von Hand haltbar ist.

12. Bohrhilfevorrichtung nach Anspruch 11, dadurch gekennzeichnet, daß die Grifflasche (37) senkrecht zur Gegenstandsebene und im Abstand zum die Ausnehmung (30) aufweisenden Bereich des Halters (12) vorgesehen ist.

13. Bohrhilfevorrichtung nach einem oder mehreren der vorhergehenden Ansprüche, dadurch gekennzeichnet, daß die zylinderwandige Öffnung (25, 45) im Führungselement (14, 44) als zylindrisches Loch ausgebildet ist.

14. Bohrhilfevorrichtung nach einem der Ansprüche 1 bis 12, dadurch gekennzeichnet, daß die zylinderwandige Öffnung als nutenförmige Ausnehmung (25') mit halbkreisförmigem Querschnitt im Führungselement (14') ausgebildet ist.

15. Bohrhilfevorrichtung nach Anspruch 4 oder einem oder mehreren der folgenden, dadurch gekennzeichnet, daß das stabförmige Teil (46) an der dem Bohrwerkzeug zugewandten Seite (50) mit Aussparungen bzw. Einschnitten (51) versehen ist.

16. Bohrhilfevorrichtung nach Anspruch 15, dadurch gekennzeichnet, daß das stabförmige Teil (46) an der an der Innenwand der Fehlbohrung anliegenden Seite (52) bzw. der anliegenden Außenkante (48) mit einer widerhakenartigen Kontur (53) versehen ist.

17. Bohrhilfevorrichtung nach einem oder mehreren der Ansprüche 1 bis 16, dadurch gekennzeichnet, daß ein separates Teil (56) vorgesehen ist, das dem vorspringenden, stabförmigen Teil (16, 46) entspricht, und daß das separate Teil (56) dazu vorgesehen ist, den Raum (28) der Fehlbohrung (20) abzüglich des durch die einzubringende Bohrung (22) benötigten Überschneidungsraumes auszufüllen.

18. Bohrhilfevorrichtung nach Anspruch 17, dadurch gekennzeichnet, daß das separate Teil (56) mehrere Sollbruchstellen (58, 59, 60, 61) aufweist, so daß es durch Abbrechen von Teilstücken (62) gekürzt werden kann.

19. Bohrhilfevorrichtung nach Anspruch 17 oder 18, dadurch gekennzeichnet, daß an einem Ende (57) des separaten Teils (56) ein seitlich vorspringendes Element (64) vorgesehen ist, das die Einschiebtiefe des separaten Teils (56) in den auszufüllenden Raum (28) begrenzt.

Fig.3

Fig.4

Fig.4a

Fig.2

Fig.1

1212P100EP

EP 0 361 290 A1

Fig.6

Fig.5

Fig.7

1212P100EP

EP 0 361 290 A1

Fig.9

Fig.10

Fig. 8

EP 0 361 290 A1

**Fig.11**

49
43
44
50
46
51
51

**Fig.12**

XIII
44
43
52
46
53
53
XIII

**Fig.13**

45
44
43
48
51
46
51
53
53

Fig.14

Fig.15

Fig.16

Fig.17

Fig.18

EP 0 361 290 A1

1212P100EP

Europäisches Patentamt

**EUROPÄISCHER RECHERCHENBERICHT**

Nummer der Anmeldung

| | **EINSCHLÄGIGE DOKUMENTE** | | EP 89117341.1 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
| Y | <u>DE - A1 - 3 446 517</u> <br> (SCHIEFER) <br> * Patentansprüche 1,3 * <br> -- | 1,2,3, 4,6,7 | B 28 D 7/00 |
| Y | <u>US - A - 2 670 637</u> <br> (WHITECHESTER) <br> * Fig. 5 * <br> -- | 1,2,3, 4,6,7 | |
| A | <u>EP - A1 - 0 255 120</u> <br> (KAISER) <br> * Fig. 16 * <br> -- | 1,2,3, 4,6,7 | |
| A | <u>CH - A - 251 710</u> <br> (RETSCH) <br> * Fig. 1 * <br> ---- | 7,10 | |

RECHERCHIERTE SACHGEBIETE (Int. Cl.4)

B 23 B
B 28 D

Der vorliegende Recherchenbericht wurde für alle Patentansprüche erstellt.

| Recherchenort | Abschlußdatum der Recherche | Prüfer |
|---|---|---|
| WIEN | 20-11-1989 | GLAUNACH |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82